# EUROPÄISCHE PATENTSCHRIFT

(11) **EP 2 711 465 B1**
(45) Veröffentlichungstag und Bekanntmachung des Hinweises auf die Patenterteilung: **20.01.2021**
(21) Anmeldenummer: 13004595.8
(22) Anmeldetag: 20.09.2013
(51) Int. Cl.: E02F 3/36, E02F 9/22, E02F 9/26, F16L 15/00, F16L 37/084

(54) **SCHLAUCHSATZ MIT ZWEI ÖLHYDRAULIK-SCHLÄUCHEN**
FLUID HOSE SET WITH TWO OIL HYDRAULIC FLUID HOSES
JEU DE TUYAUX COMPRENANT DEUX TUYAUX POUR FLUIDES OLÉOHYDRAULIQUES

(30) Priorität: 25.09.2012 DE 202012009241 U; 11.04.2013 DE 202013003398 U
(43) Veröffentlichungstag der Anmeldung: 26.03.2014
(73) Patentinhaber: Rubenbauer, Georg, 95695 Mähring (DE)
(72) Erfinder: Rubenbauer, Georg, 95695 Mähring (DE)
(74) Vertreter: Lichti - Patentanwälte Partnerschaft mbB

(56) Entgegenhaltungen:
- EP-A1- 0 170 042
- EP-A1- 0 605 354
- CA-A1- 2 109 543
- DE-A1- 4 232 439
- DE-U1-202010 005 482
- DE-U1-202012 100 577
- US-A- 3 770 009
- US-A- 5 158 327
- US-A1- 2007 257 484

## Beschreibung

Die Erfindung betrifft einen Schlauchsatz nach dem Anspruch 1.

Ein Druckfluid im Rahmen der Erfindung ist ein hydraulischen oder pneumatischen Aktuatoren beaufschlagendes Hydrauliköl unter einem Druck von mindestens 30 bar oder ein ebenfalls hydraulischen oder pneumatischen Aktuatoren beaufschlagendes Druckgas unter mindestens einem Druck von 5 bar bei eben pneumatischer Ansteuerung der hydraulischen oder pneumatischen Aktuatoren, jeweils zumindest im Vorlauf. Daher ist das erfindungsgemäß System und seine sämtlichen Komponenten nicht nur geeignet zur Führung eines solchen Druckfluids, wie vorstehend definiert, sondern dazu ausgebildet und ausgelegt. Ähnliche Komponenten, die nicht für ein derart definiertes Druckfluid ausgebildet und ausgelegt sind, sind nicht Gegenstand der Erfindung und im Rahmen derselben nicht einsetzbar.

Es sind Druckfluid-Schlauchsätze mit Druckfluid-Schläuchen, insbesondere Ölhydraulik- oder Pneumatikschläuchen, zur Herstellung einer flexiblen Druckfluid-Wirkverbindung zwischen Traktoren, Zugmaschinen, Baumaschinen einerseits und andererseits an diesen lösbar befestigten fluid-, insbesondere hydraulikbetätigten Arbeitswerkzeugen bekannt. Derartige Druckfluid-Schläuche sind zum Anschluss an den Fahrzeugen und Werkzeugen mit Schnellkupplungs-Steckanschlüssen ausgerüstet. Für einen Druckfluid- oder Hydraulikkreislauf sind zumindest zwei Leitungsanschlüsse mit Hin- und Rücklauf vorgesehen. Es ist daher eine eindeutige und verwechslungsfreie Kennzeichnung der jeweiligen Schlauchware erforderlich und oft sogar vorgeschrieben.

Diese Kennzeichnung kann über farblich gekennzeichnete Aufsteckkappen, Ringe über den Schlauchenden, Farbaufbringen etc. erfolgen.

Die US 5,158,327 sieht ein gattungsgemäßes Griffteil für eine Fluidschlauchleitung und eine solche mit einem entsprechenden Griffteil vor, wobei das Griffteil zweiteilig ausgebildet ist und zum einen ein starres zylindermantelförmiges Kernteil mit einem Durchlass für das Fluid aufweist, zum anderen eine das Kernteil umgebende spritzgegossene PVC-Hülse. Das Griffteil hat an seinen beiden Enden seines Kernteils Schraubanschlüsse, zum einen in Form eines Innengewindes zum Anschluss eines Schlauchs und zum anderen in Form eines Außengewindes zum Anschluss eines (Steck-)Kupplungsteils, wobei die Gewinde einstückig am Kernteil ausgebildet sind und gleichen Durchmesser aufweisen. Insbesondere beim Einsatz eines solchen Griffteils bei einer Ölhydraulikschlauchverbindung ist nachteilig, dass die umgebende aufgespritzte Kunststoffhülse des Griffteils durch Druckhydrauliköl angegriffen und aufgeweicht werden kann und hierbei trotz in der Außenwandung vorgesehenen Ringnuten ihre Griffigkeit verliert. Weiterhin ist nachteilig, dass die Anschlussverschraubungen einen vorgegebenen festen Durchmesser haben und für unterschiedliche Schlauchdurchmesser und deren unterschiedliche Schlauchanschlüsse jeweils unterschiedliche Griffteile mit entsprechenden angepassten Gewindedurchmessern, zumindest auf der Schlauchanschlussseite vorgehalten werden müssen.

Der Erfindung liegt daher die Aufgabe zugrunde, einen gattungsgemäßen Druckfluid-Schlauchsatz, eine Druckfluid-Schlauchkupplung, einen Druckfluid-Schlauch und ein Druckfluid-Griffteil zu schaffen, die eine dauerhafte Markierung zur Zuordnung für Hin- und Rücklauf sowie eine dauerhafte Griffigkeit und Aufsteckbarkeit eines mit dem Griffteil verbundenen und mit diesem eine Schlauchkupplung bildenden Kupplungsteil auf ein Gegen-Kupplungsteil gewährleisten. Erfindungsgemäß wird die genannte Aufgabe durch einen gattungsgemäßen Druckfluid-Schlauchsatz mit den kennzeichnenden Merkmalen des Anspruchs 1 gelöst.

Durch die einstückige Ausbildung des Griffteils wird vermieden, dass dieses zweiteilig mit einer äußeren Hülse aus Kunststoff ausgebildet sein muss, welche letztere insbesondere durch Hydraulikflüssigkeit oder sonstige durch eine solche Schlauchleitung geführten Flüssigkeiten-angreifbar und beschädigbar ist. Erfindungsgemäß besteht das Griffteil aus zumindest außen eloxiertem Aluminium. Da das Griffteil aus einer Aluminiumlegierung besteht, ist es lackiert, insbesondere einbrennlackiert. Durch die Ausbildung des Griffteils als eloxiertes Aluminiumteil können dem Griffteil unterschiedliche Farbgebungen vermittelt werden bzw. Reflektionseigenschaften in unterschiedlichen Wellenlängenbereichen, wodurch verschiedene Griffteile unterschiedliche Farbeindrücke vermitteln und damit mit unterschiedlichen Farben bzw. mit unterschiedlichem Reflektionsvermögen zur unterschiedlichen dauerhaften Markierung von Hin- und Rücklauf verwendet werden können, während gleichzeitig die Haltbarkeit und Griffigkeit des Griffteils auf Dauer gewährleistet ist. Demgemäß sieht eine bevorzugte Ausgestaltung eine Eloxierung, die lediglich in einem engen Spektralbereich lichtreflektierend ist, vor.

Zur Sicherung einer optimalen Griffigkeit ist in Weiterbildung eine Riffelung auf der Außenwandung vorgesehen, wobei weiterhin die Riffelung durch Nuten gebildet ist und insbesondere die Riffelung durch kreuzweise unter einem endlichen Winkel ungleich 180° verlaufende Nuten gebildet ist, so dass zwischen ihnen nicht quadratische rautenförmige Erhebungen ausgebildet sind.

Zusätzlich oder alternativ können darüber hinaus sich zu einer Längsachse des Griffteils parallel erstreckende Längsnuten in der Außenwandung des Griffteils vorgesehen sein, in die Schnüre oder Riemen aus Kunststoff oder Gummi eingesetzt sind, wobei weiterhin insbesondere die Längsnuten im Bereich ihrer Öffnung an der Außenwandung des Griffteils mit Hinterschneidungen versehen sind und vorzugsweise die Längsnuten einen teilkreisförmigen Querschnitt mit einer sich über mehr als 90° erstreckenden Umfangswandung aufweisen.

Um die Steckbarkeit zu erhöhen bzw. das Herstellen der Steckverbindung zu erleichtern, ist in einer weiteren bevorzugten Ausgestaltung ein an dem Kupplungsteil zugewandten Ende des Griffteils ausgebildeter Ringflansch vorgesehen, wobei ein derartiger am Griffteil einstückig ausgebildeter Ringflansch ein Widerlager beim Angreifen eines Benutzers am Griffteil und Bewegen desselben in Aufsteckrichtung zur Herstellung einer fluiddichten Kupplungsverbindung bildet.

In bevorzugter Weiterbildung können mehrere symmetrisch über den Umfang verteilte Abflachungen vorgesehen sein, wobei insbesondere mehrere Abflachungen axial hintereinander angeordnet sind. Auch dies trägt zur Erhöhung der Griffigkeit des Griffteils bei.

Schließlich ist in weiterer Ausgestaltung eine Markierung in Form mindestens einer Nut oder einer balkenförmigen Erhebung vorgesehen, wobei entweder eine Markierung in Form einer sich in Umfangsrichtung erstreckenden Quernut oder eines sich in Umfangsrichtung erstreckenden Querbalkens vorgesehen ist oder eine Markierung in Form eines Kreuzes mit sich kreuzenden Nuten oder balkenförmigen Erhebungen vorgesehen ist. Hierzu werden zusätzlich zur Farbgebung bzw. dem Reflektionsvermögen in unterschiedlichen Wellenbereichen weitere Kennzeichnungen bzw. Markierungen vorgesehen, die auch unmittelbar eindeutig die Fließrichtung (Hin- oder Rücklauf) angeben, die dann bei entsprechender Farbgebung der Griffteile auch diesen Farben zugeordnet ist. Eine bevorzugte Weiterleitung des Schlauchsatzes sieht vor, dass ein erster Hydraulikschlauch ein Griffteil mit einer Markierung nach Anspruch 8, der zweite Hydraulikschlauch ein Griffteil mit einer anderen Markierung nach Anspruch 8 hat.

Weitere Vorteile und Merkmale der Erfindung ergeben sich aus den Ansprüchen und aus der nachfolgenden Beschreibung, in der Ausführungsbeispiele der Schlauchkupplung unter Bezugnahme auf die Zeichnung im Einzelnen beschrieben sind. Dabei zeigt:

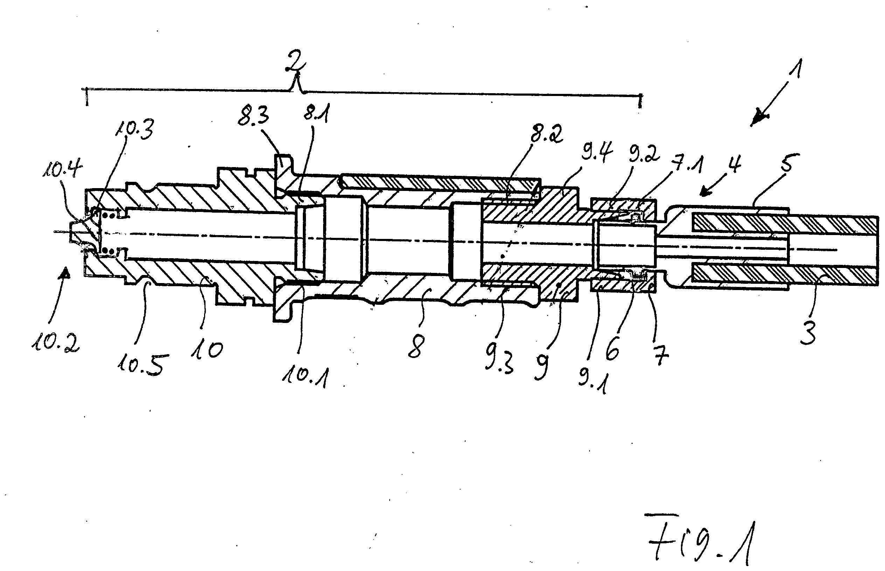

- Fig. 1: eine Druckfluid-Schlauchkupplung eines Druckfluid-Schlauches mit ihren sämtlichen Einzelteilen im Längsschnitt; teils der Schlauchkupplung;
- Fig. 2b: eine zweite Ausführungsform eines Griffteils der Schlauchkupplung;

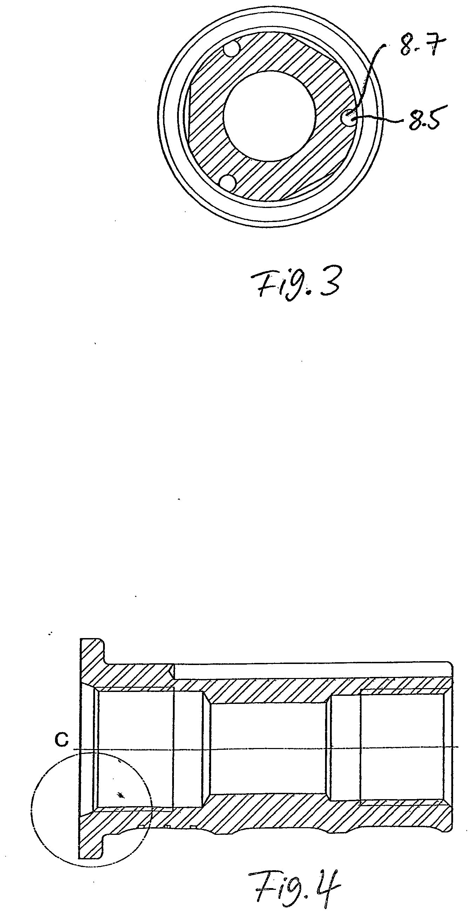

- Fig. 3: einen Längsschnitt durch eines der Griffteile der Fig. 2a, 2b alleine entsprechend B-B in den Fig. 2a, 2b; und
- Fig. 4: einen Querschnitt durch ein Griffteil der Fig. 2a, 2b entsprechend A-A.

Ein Druckfluid-Schlauch, hier in der Ausgestaltung eines Ölhydraulikschlauches 1 eines erfindungsgemäßen Schlauchsatzes weist eine Schlauchkupplung 2 und eine flexible Schlauchleitung 3 mit einem Schraubanschluss 4 auf. Dieser besteht aus einer Presshülse 5 zur festen unlösbaren bzw. nicht zerstörungsfrei lösbaren Verbindung mit der Schlauchleitung 3 und einer auf einem einstückig mit dieser ausgebildeten Fortsatz 6 drehbar, aber nicht trennbar bzw. nicht verlierbar aufsitzenden Schraubmutter 7.

Die Schlauchkupplung 2 weist ein ausgebildetes Griffteil 8, einen geraden Einschraubstutzen 9 und ein eigentliches Kupplungsteil 10 auf. Der gerade Einschraubstutzen 9 dient zur Verbindung des Griffteils 8 mit dem Schraubanschluss 4 der flexiblen Schlauchleitung 3. Der Einschraubstutzen 9 ist auf seiner dem Griffteil 8 abgewandten Ende 9.1 mit einem äußeren Schraubgewinde 9.2 versehen, das mit einem inneren Schraubgewinde 7.1 der Schraubmutter 7 zusammenwirkt. Die Innenwandung des Einschraubstutzens 9 ist an diesem freien Ende 9.1 sich konisch zur Stirnseite hin erweiternd ausgebildet. Hierdurch wird eine dichte Verbindung zwischen dem Ende 9.2 des geraden Schraubstutzens 9 und dem Fortsatz 6 erreicht, wenn diese Teile durch Verschrauben der Mutter 7 auf dem Gewinde 9.2 des Einschraubstutzens 9 gegeneinander verspannt werden.

Auf seiner dem Ende 9.1 und Schraubgewinde 9.2 axial abgewandten Seite ist der Einschraubstutzen 9 ebenfalls mit einem Außengewinde 9.3 versehen. Zwischen beiden Außengewinden 9.2, 9.3 ist ein radial überstehender Flansch 9.4 ausgebildet, dessen Außenkontur als Sechskant ausgebildet ist, damit an diesem Werkzeuge zum Einschrauben des Einschraubstutzens 9, insbesondere in das Griffteil 8, angreifen können.

Während für sämtliche Ausgestaltungen der erfindungsgemäßen Kupplungseinheit 2 das mit dem Griffteil 8 zusammenwirkende Schraubgewinde 9.3 das gleiche ist, sind für Schlauchanschlüsse 4 und Schläuche 3 unterschiedlichen Durchmessers die Schraubstutzen 9 mit Anschlussgewinden 9.2 unterschiedlichen Durchmessers versehen, so dass an die erfindungsgemäße Schlauchkupplung 2 bzw. an ein Griffteil 8 Schlauchleitungen 3 und mit diesen fest verbundene Schraubanschlüsse 4 unterschiedlichen Durchmessers angeschlossen werden können.

Das Kupplungsteil 10 ist als Steckkupplungsteil ausgebildet und weist an seiner dem Griffteil 8 zugewandten Seite ein äußeres Schraubgewinde 10.1 auf. An dem entgegengesetzten Ende ist ein Auslassventil 10.2 mit einem eine (Schraub-)Feder 10.3 beaufschlagten Ventilkopf 10.4 vorgesehen, der einen aus dem Hauptkörper des Kupplungsteils 10 herausragenden Ansatz aufweist. Die Feder 10.3 drückt den Ventilkopf 10.4 in Schließstellung. Beim Verbinden des Kupplungsteils 10 mit einem entsprechenden Gegenkupplungsteil (nicht dargestellt) wird über in eine Ringnut 10.5 des Kupplungsteils 10 eingreifende Rastelemente des Gegenkupplungsteils eine dichte Verbindung geschaffen. Dabei wird durch axiale Druckausübung auf den Fortsatz des Ventilkopfes 10.4 das Ventil geöffnet, so dass eine dichte Fluidverbindung gegeben ist und Fluid zwischen Gegenkupplungsteil und Kupplungsteil 10 übertreten kann.

Das Griffteil 8 ist als einstückiger Metallkörper ausgebildet. Es weist an seinen beiden Stirnseiten Innengewinde 8.1, 8.2 auf, die mit den Gewinden 10.1 des Kupplungsteils 10 bzw. 9.3 des Einschraubstutzens 9 zusammenwirken. An der dem Kupplungsteil 10 zugewandten Seite weist das Griffteil 8 einen Ringflansch 8.3 auf, über den ein Einsteckdruck zum Einstecken des Kupplungsteils 10 in das entsprechende Gegenkupplungsteil ausgeübt werden kann. Das Aluminium am Griffteil 8 hält Druck bis zu 1500 bar aus.

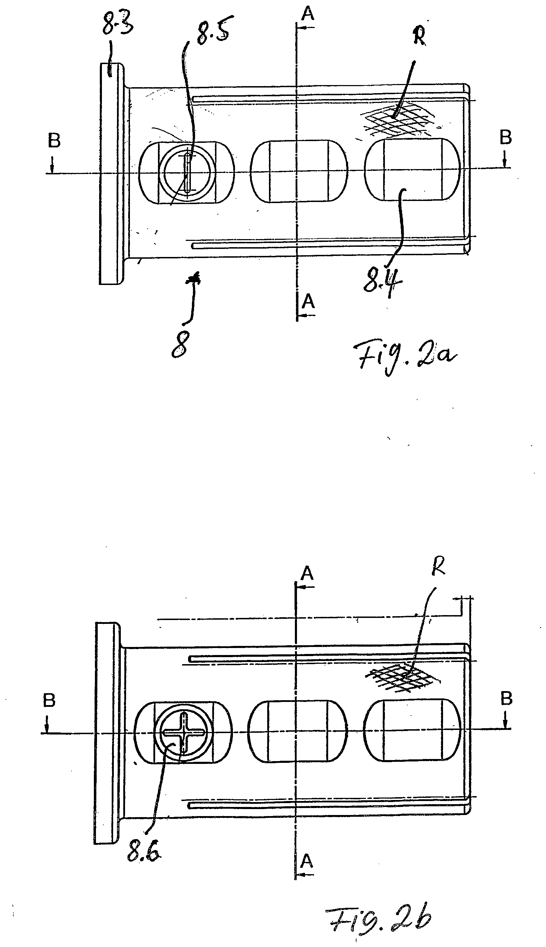

Wie insbesondere den Fig. 2a und 2b entnehmbar ist, ist das Griffteil auf seiner im Wesentlichen zylindrischen Außenwandung mit einer Riffelung R versehen, die durch sich kreuzende Nuten gebildet ist, wobei die sich kreuzende Nuten derart unter einem endlichen Winkel ungleich 90° zur Symmetrieachse des Stücks 8 verlaufen, dass zwischen ihnen nicht quadratische Rauten ausgebildet sind, wie dies bei R in der Fig. 2a angedeutet ist. Hierdurch wird die Griffigkeit des Griffteils 8 verbessert.

Weiterhin sind gleichmäßig um 120° über den Umfang verteilt abgeflachte Bereiche oder Abflachungen 8.4 vorgesehen, wobei jeweils drei in Längsrichtung hintereinander angeordnet sind. Auf der dem Ringflansch 8.3 zugewandten Abflachung ist eine Markierung ausgebildet und zwar bei dem Griffteil der Fig. 2a in Form eines Querbalkens 8.5, der sich also senkrecht zur Achse in Umfangsrichtung erstreckt und entweder als Nut oder als erhabende Rippe ausgebildet sein kann. Die Markierung der Ausgestaltung der Fig. 2b ist als Kreuz 8.6 ausgebildet und besteht demgemäß aus zwei sich unter einem rechten Winkel kreuzenden Nuten oder aber entsprechend zwei sich unter einem rechten Winkel kreuzenden Rippen, wobei die eine Rippe achsparallel verläuft.

Schließlich können in bevorzugter Ausgestaltung zwischen den gleichmäßig über den Umfang verteilten Abflachungen 8.4 in der Außenwandung des Griffsteils 8 Längsnuten 8.7 mit teilkreisförmigem Querschnitt ausgebildet sein, wobei der Teilkreis mehr als 180° umfasst, so dass hierdurch Hinterschneidungen gebildet werden. In diesen Nuten 8.4 können Schnüre oder Riemen 8.5 aus Kunststoff oder Gummi eingesetzt sein, die ebenfalls zur Erhöhung der Griffigkeit des Griffteils 8 beitragen.

Das Griffteil 8 besteht aus Aluminium, das eloxiert ist. Die Griffteile 8 der Fig. 2a und 2b mit unterschiedlichen Markierungen sind auch in unterschiedlichen Farben eloxiert bzw. derart unterschiedlich eloxiert, dass sie Licht in deutlich unterschiedlichen Wellenbereichen reflektieren. Beispielsweise kann die Eloxierung des Griffteils der Fig. 2b mit den sich kreuzenden Rippen 8.6 derart sein, dass rotes Licht reflektiert wird, das Griffteil also rot erscheint, während das Griffteil der Fig. 2a mit der sich in Querrichtung erstreckenden Markierungsrippe derart eloxiert ist, dass es blaues Licht reflektiert, also blau erscheint. Auch können insbesondere gelbe oder grüne Eloxierungen vorgesehen sein.

## Patentansprüche

1. Schlauchsatz, mit zwei Ölhydraulikschläuchen, mit jeweils einer Schlauchleitung (3) mit einem Schlauchanschluss und einer Schlauchkupplung (2) mit einem Griffteil (8) und einem Kupplungsteil (10), wobei das Griffteil (8) mit dem Kupplungsteil (10) einerseits und mit der Schlauchleitung (3) andererseits über Gewinde (8.3, 10.1; 8.2, 9.3) der jeweiligen Teile (8, 10, 3) verbunden ist, **dadurch gekennzeichnet, dass** jeden Griffteile (8) einstückig aus Aluminiumlegierung ausgebildet und zumindest außen eloxiert sind.

2. Schlauchsatz nach Anspruch 1, **dadurch gekennzeichnet, dass** die Griffteile (8) sich durch unterschiedliches Reflektionsvermögen in verschiedenen Wellenbereichen und/oder unterschiedliche Markierungen (8.5, 8.6) unterscheiden.

3. Schlauchsatz nach Anspruch 1, **dadurch gekennzeichnet dass** die Eloxierung jedes Griffteils (8) derart ist, dass die Griffteile jeweils lediglich in einem unterschiedlichen engen Spektralbereich lichtreflektierend sind.

4. Schlauchsatz nach einem der vorangehenden Ansprüche, **dadurch gekennzeichnet, dass** die Griffteile (8) eine Riffelung (R) auf der Außenwandung aufweisen, die insbesondere durch Nuten (8.4) gebildet ist und/oder die Riffelung durch kreuzweise unter einem endlichen Winkel ungleich 90° verlaufende Nuten (8.4) gebildet ist, so dass zwischen ihnen nicht quadratische rautenförmige Erhebungen ausgebildet sind.

5. Schlauchsatz nach einem der vorangehenden Ansprüche, **gekennzeichnet durch** sich zu einer Längsachse des jeweiligen Griffteils (8) parallel erstreckende Längsnuten (8.4) in der Außenwandung des Griffteils (8), in die Schnüre oder Riemen (8.5) aus Kunststoff oder Gummi eingesetzt sind, wobei insbesondere die Längsnuten (8.4) im Bereich ihrer Öffnung an der Außenwandung des jeweiligen Griffteils (8) mit Hinterschneidungen versehen sind und/oder die an der Außenwandung des Griffteils (8) ausgebildeten Längsnuten (8.7) einen teilkreisförmigen Querschnitt mit einer sich über mehr als 180° erstreckenden Umfangswandung aufweisen.

6. Schlauchsatz nach einem der vorangehenden Ansprüche, **dadurch gekennzeichnet, dass** zumindest ein Griffteil (8) einen an seinem dem Kupplungsteil (10) zugewandten Ende ausgebildeten Ringflansch (9.3) aufweist.

7. Schlauchsatz nach einem der vorangehenden Ansprüche, **dadurch gekennzeichnet, dass** das Griffteil (8) mehrere symmetrisch über den Umfang verteilte Abflachungen (8.4) aufweist, wobei insbesondere am Griffteil (8) mehrere Abflachungen axial hintereinander angeordnet sind.

8. Schlauchsatz nach einem der vorangehenden Ansprüche, **dadurch gekennzeichnet, dass** ein Griffteil (8) jeweils eine Markierung (8.5) in Form zumindest einer Nut oder einer balkenförmigen Erhebung aufweist, wobei insbesondere an einem Griffteil (8) eine Markierung (8.5) in Form einer sich in Umfangsrichtung erstreckenden Quernut oder eines sich in Umfangsrichtung erstreckenden erhabenen Querbalkens (Querrippe) vorgesehen ist und/oder an einem Griffteil (8) eine Markierung (8.5) in Form eines Kreuzes mit sich kreuzenden Nuten oder balken- oder rippenförmigen Erhebungen vorgesehen ist.

9. Schlauchsatz nach einem der vorangehenden Ansprüche, **dadurch gekennzeichnet, dass** ein erster Hydraulikschlauch ein Griffteil (8) mit einer Markierung (8.5) in Form einer sich in Umfangsrichtung erstreckenden Quernut oder eines sich in Umfangsrichtung erstreckenden Querbalkens aufweist und der zweite Hydraulikschlauch ein Griffteil (8) mit einer Markierung (8.5) in Form eines Kreuzes mit sich kreuzenden Nuten oder balkenförmigen Erhebungen aufweist.

## Claims

1. Tube set, comprising two oil-hydraulics tubes, each of which has a tube line (3) having a tube connection and a tube coupling (2) having a handle part (8) and a coupling part (10), the handle part (8) being connected to the coupling part (10) on one side and to the tube line (3) on the other side via threads (8.3, 10.1; 8.2, 9.3) of the respective parts (8, 10, 3), **characterized in that** each handle part (8) is made in one piece from aluminum alloy and is anodized at least on the outside.

2. Tube set according to claim 1, **characterized in that** the handle parts (8) differ **in that** they have different reflectivities in different wavebands and/or different markings (8.5, 8.6).

3. Tube set according to claim 1, **characterized in that** the anodization of each handle part (8) is such that each handle part only reflects light in a different, narrow spectral range.

4. Tube set according to any of the preceding claims, **characterized in that** the handle parts (8) have a corrugation (R) on the outer wall, which corrugation is formed in particular by grooves (8.4), and/or the corrugation is formed by grooves (8.4) which extend obliquely at a finite angle other than 90° such that non-square diamond-shaped elevations are formed between said grooves.

5. Tube set according to any of the preceding claims, **characterized by** longitudinal grooves (8.4) which extend parallel to a longitudinal axis of the respective handle part (8) in the outer wall of the handle part (8), into which grooves cords or straps (8.5) made of plastic or rubber are inserted, the longitudinal grooves (8.4) being in particular provided with undercuts in the region of their opening on the outer wall of the respective handle part (8), and/or the longitudinal grooves (8.7) formed on the outer wall of the handle part (8) having a partial-circular cross section that has a peripheral wall extending over more than 180°.

6. Tube set according to any of the preceding claims, **characterized in that** at least one handle part (8) has an annular flange (9.3) formed on the end thereof that faces the coupling part (10).

7. Tube set according to any of the preceding claims, **characterized in that** the handle part (8) has a plurality of flat regions (8.4) distributed symmetrically over the circumference, wherein in particular, a plurality of said flat regions are arranged axially behind the other on the handle part (8).

8. Tube set according to any of the preceding claims, **characterized in that** one handle part (8) has a marking (8.5) in the form of at least one groove or of a bar-shaped elevation, wherein in particular, a marking (8.5) on a handle part (8) is provided in the form of a circumferentially extending transverse groove or of a raised circumferentially extending transverse bar (transverse rib) and/or a marking (8.5) on a handle part (8) is provided in the form of a cross having intersecting grooves or bar-shaped or rib-shaped elevations.

9. Tube set according to any of the preceding claims, **characterized in that** a first hydraulic tube has a handle part (8) having a marking (8.5) in the form of a circumferentially extending transverse groove or of a circumferentially extending transverse bar and the second hydraulic tube has a handle part (8) having a marking (8.5) in the form of a cross having intersecting grooves or bar-shaped elevations.

## Revendications

1. Jeu de tuyaux, comportant deux tuyaux oléohydrauliques, comportant respectivement une conduite de tuyau (3), comportant un raccord de tuyau, et un accouplement de tuyau (2) comportant une partie de poignée (8) et une partie d'accouplement (10), la partie de poignée (8) étant reliée d'un côté à la partie d'accouplement (10) et de l'autre côté à la conduite de tuyau (3) par l'intermédiaire de filetages (8.3, 10.1 ; 8.2, 9.3) des parties respectives (8, 10, 3), **caractérisé en ce que** chaque partie de poignée (8) est réalisée d'une seule pièce à partir d'un alliage d'aluminium et est anodisée au moins à l'extérieur.

2. Jeu de tuyaux selon la revendication 1, **caractérisé en ce que** les parties de poignée (8) diffèrent par une capacité de réflexion différente dans différentes zones d'ondes et/ou par des marquages différents (8.5, 8.6).

3. Jeu de tuyaux selon la revendication 1, **caractérisé en ce que** l'anodisation de chaque partie de poignée (8) est telle que les parties de poignée réfléchissent respectivement la lumière seulement dans une zone spectrale étroite différente.

4. Jeu de tuyaux selon l'une des revendications précédentes, **caractérisé en ce que** les parties de poignée (8) présentent une ondulation (R) sur la paroi extérieure, laquelle ondulation est formée en particulier par des rainures (8.4) et/ou par des rainures (8.4) s'étendant en forme de croix à un angle fini autre que 90°, de sorte que des élévations non carrées en forme de losange sont réalisées entre lesdites rainures.

5. Jeu de tuyaux selon l'une des revendications précédentes, **caractérisé par** des rainures longitudinales (8.4) s'étendant parallèlement à un axe longitudinal de la partie de poignée respective (8) dans la paroi extérieure de la partie de poignée (8), dans lesquelles rainures sont insérés des cordons ou sangles (8.5) en plastique ou en caoutchouc, les rainures longitudinales (8.4) étant en particulier pourvues de contre-dépouilles dans la zone de leur ouverture sur la paroi extérieure de la partie de poignée respective (8), et/ou les rainures longitudinales (8.7) réalisées sur la paroi extérieure de la partie de poignée (8) présentant une section transversale partiellement circulaire comportant une paroi circonférentielle s'étendant sur plus de 180°.

6. Jeu de tuyaux selon l'une des revendications précédentes, **caractérisé en ce qu'**au moins une partie de poignée (8) présente une bride annulaire (9.3) réalisée sur son extrémité tournée vers la partie d'accouplement (10).

7. Jeu de tuyaux selon l'une des revendications précédentes, **caractérisé en ce que** la partie de poignée (8) présente plusieurs aplatissements (8.4) répartis de façon symétrique sur la circonférence, en particulier, plusieurs aplatissements étant disposés axialement les uns derrière les autres sur la partie de poignée (8).

8. Jeu de tuyaux selon l'une des revendications précédentes, **caractérisé en ce qu'**une partie de poignée (8) présente respectivement un marquage (8.5) sous la forme d'au moins une rainure ou d'une élévation en forme de barre, en particulier un marquage (8.5) sous la forme d'une rainure transversale s'étendant dans la direction circonférentielle ou d'une barre transversale surélevée (nervure transversale) s'étendant dans la direction circonférentielle étant prévu sur une partie de poignée (8), et/ou un marquage (8.5) sous la forme d'une croix comportant des rainures croisées ou des élévations en forme de barre ou de nervure étant prévu sur une partie de poignée (8).

9. Jeu de tuyaux selon l'une des revendications précédentes, **caractérisé en ce qu'**un premier tuyau hydraulique présente une partie de poignée (8) comportant un marquage (8.5) sous la forme d'une rainure transversale s'étendant dans la direction circonférentielle ou d'une barre transversale s'étendant dans la direction circonférentielle, et **en ce que** le second tuyau hydraulique présente une partie de poignée (8) comportant un marquage (8.5) sous la forme d'une croix comportant des rainures entrecroisées ou des élévations en forme de barre.
